# EUROPEAN PATENT SPECIFICATION

(11) **EP 3 131 392 B1**
(45) Date of publication and mention of the grant of the patent: **26.12.2018**
(21) Application number: 15779552.7
(22) Date of filing: 16.04.2015
(51) Int. Cl.: A01N 25/02, A01N 25/04, A01N 39/04, A01N 57/20, A01P 13/00

(54) **HOMOGENEOUS AQUEOUS PESTICIDE CONCENTRATES CONTAINING PARAFFINIC OILS**
HOMOGENE WÄSSRIGE PESTIZIDKONZENTRATE MIT PARAFFINISCHEN ÖLEN
CONCENTRÉS PESTICIDES AQUEUX HOMOGÈNES CONTENANT DES HUILES PARAFFINIQUES

(30) Priority: 17.04.2014 US 201461980937 P; 17.04.2014 US 201461980921 P
(43) Date of publication of application: 22.02.2017
(73) Proprietor: Dow AgroSciences LLC, Indianapolis, IN 46268 (US)
(72) Inventor: OLDS, Melissa Gail, Indianapolis, IN 46268-1054 (US); SHAO, Hui, Indianapolis, IN 46268 (US); TANK, Holger, Indianapolis, IN 46268-1054 (US)
(74) Representative: f & e patent
(86) International application number: PCT/US2015/026195
(87) International publication number: WO 2015/161090

(56) References cited:
- EP-A1- 0 331 474
- EP-A1- 0 485 207
- EP-A1- 0 617 894
- WO-A2-01/10210
- WO-A2-02/096199
- AU-A1- 2013 206 347
- GB-A- 2 267 825
- US-A- 4 610 311
- US-A- 5 035 741
- US-A- 5 547 918
- US-A1- 2012 071 320
- US-A1- 2013 079 228
- US-A1- 2013 237 419
- US-A1- 2013 252 817
- US-A1- 2013 252 817
- US-B2- 6 767 863
- .: "Surpass 475: 2,4-D dimethylamine/diethanolamine salte", , 14 April 2011 (2011-04-14), pages 1-10, XP055444697, Australia Retrieved from the Internet: URL:http://www.herbiguide.com.au/Labels/24 DAM50_61515-51803.PDF [retrieved on 2018-01-25]
- .: "Surpass 300 2,4-D isopropylamine salt", , 1 January 1992 (1992-01-01), pages 1-14, XP055444716, Retrieved from the Internet: URL:http://websvr.infopest.com.au/LabelRou ter/Label?ProductCode=52999&LabelType=L&Ha sMPL=False&IsSponsor=False [retrieved on 2018-01-25]

## Description

### BACKGROUND

Economical, commercially available techniques for agricultural spraying typically include the use of hydraulic spray nozzles that inherently produce a wide spectrum of spray droplet sizes. The potential for these spray droplets to drift from the initial, desired site of application is a function of droplet size, with smaller droplets having a higher propensity for off-target movement. Although other factors such as meteorological conditions and spray boom height contribute to the potential for drift, spray droplet size distribution has been found to be a predominant factor. Teske et. al. (Teske M. E., Hewitt A. J., Valcore, D. L. 2004. The Role of Small Droplets in Classifying Drop Size Distributions ILASS Americas 17th Annual Conference: Arlington VA) have reported a value of <156 microns (µm) as the fraction of the spray droplet distribution that contributes to drift. Robert Wolf (Wolf, R. E., Keys to Spray Drift Management, Microsoft® PowerPoint Presentation (filename: Drift Minimization - 2009), available at www.bae.ksu.edu/faculty/wolf/PowerPoint.htm, last viewed October 8, 2013) cites a value of <200 µm as the driftable fraction.

The negative consequences of off-target movement can be quite pronounced. Some herbicides have demonstrated very sensitive phytotoxicity to particular plant species at extremely low parts per million (ppm) or even parts per billion (ppb) levels, resulting in restricted applications around sensitive crops, orchards, and residential plantings. For example, the California Dept of Pesticide Regulation imposes buffers of ½ - 2 miles for propanil containing herbicides applied aerially in the San Joaquin valley.

Significant research efforts, involving numerous field trials, wind tunnel tests and subsequent generation of predictive math models, have led to a better understanding of the relationship between spray droplet size and the potential for off-target drift. Based on this work, it has been found that a good estimation of droplet size likely to contribute to drift is the fraction of spray droplets having a diameter less than 150 µm.

The use of excipients and carriers have been investigated as a means for reducing drift. WO/2013/142263 describes the use of vegetable oils as an excipient/carrier for reducing drift. However, the use of vegetable or seeds oils can raise the freezing point of herbicide formulations. For example, an aqueous solution of 2,4-D choline freezes at ca. -20°C. The addition of a vegetable or seed oil, such as canola oil, palm oil, sunflower oil, etc.) raise the freezing point to -10°C. The raising of the freezing point can affect the performance of the herbicidal composition, particularly when stored at low temperatures before use.

### SUMMARY

Compositions to reduce agricultural spray drift and methods of making and using thereof are described herein. The compositions reduce the amount of driftable fines of a pesticide spray in both aerial and ground spray applications. The compositions contain aqueous agricultural spray mixtures in combination with petroleum derived paraffinic oils and one or more pesticides as further defined in the claims and described below. In some embodiments, the composition is an aqueous composition, such as an aqueous concentrate. In some embodiments, the concentrate does not contain thickeners, preferably thickeners that affect the elongational viscosity (e.g., poly(meth)acrylates, guar gum, polysaccharide, polyvinyl-based polymers, or modified clays).

The compositions described herein include aqueous pesticidal concentrates containing from 5 to 90 weight percent of a pesticide which is an auxinic herbicide selected from a water soluble salt of 2,4-D, a water soluble salt of triclopyr, a water soluble salt of dicamba, or a mixture thereof; from 0.1 to 20 weight percent of a surfactant wherein the surfactant is selected from phosphate ester surfactants, polymeric surfactants and mixtures thereof, said surfactants being an acid or salt of a mono or dialkyl phosphate ester, an acid or salt of an ethoxylated mono or dialkyl phosphate ester, an acid or salt of a mono or dialkyl phosphate ester of an ethoxylated tristyrylphenol, an acid or salt of a mono or dialkyl phosphate ester of an ethoxylated phenol or an ethoxylated alkylphenol, an ABA block copolymer having a hydrophilic portion of polyethylene oxide and a hydrophobic portion of poly(12-hydroxystearate), a polyvinyl alcohol resin wherein the degree of hydrolysis is 86-89%, a block or graft acrylate or methacrylate copolymer, an alkyd polyethylene oxide resin, or an AB block copolymer containing EO and PO blocks; and from 0.1 to 20 weight percent of a petroleum derived paraffinic oil. These aqueous pesticide concentrates are homogeneous liquids that form a stable emulsion upon dilution into a spray solution.

The compositions contain a pesticide. The pesticide is a water-soluble salt of one or more auxinic herbicides. The pesticide is a water soluble salt of 2,4-D, a water soluble salt of triclopyr, a water soluble salt of dicamba, or mixtures thereof.

In an example of an aqueous pesticide concentrate composition, the pesticide is 2,4-D choline salt or 2,4-D dimethyl ammonium salt. In another example of an aqueous pesticide concentrate composition, the pesticide is 2,4-D choline salt or 2,4-D dimethyl ammonium salt, and the petroleum derived paraffinic oil is a normal paraffin, an isoparaffin, a cycloparaffin, a highly refined paraffinic mineral oil, a solvent dewaxed light or heavy paraffinic distillate, or mixtures thereof. In a further example of an aqueous concentrate composition, the pesticide is 2,4-D choline salt and the petroleum derived paraffinic oil is a normal paraffin, an isoparaffin, a cycloparaffin, a highly refined paraffinic mineral oil, a solvent dewaxed light or heavy paraffinic distillate, or mixtures thereof.

The aqueous concentrate is typically diluted with water prior to use or at the time of use to form an emulsion. The concentrate and/or water to which the concentrate is added can contain one or more additional additives, such as emulsifiers, antifoam agents, preservatives, antioxidants, colorants, and inert filling materials.

### DETAILED DESCRIPTION

### I. Definitions

As used herein, petroleum derived paraffinic oils refers to liquids, oils, and/or waxes derived from petroleum or petroleum derivatives.

### II. Compositions

Aqueous pesticide concentrates are pesticide containing compositions where water serves as the primary solvent or continuous phase of the composition. The concentrates contain one or more pesticides as defined above, and one or more inert ingredients such as surfactants and petroleum derived paraffinic oils. The aqueous pesticide concentrates are homogeneous, flowable liquids.

The aqueous concentrate compositions can be stored in suitable containers as will be readily recognized by one of skill in the art and can be, for example, solutions, emulsions, or suspensions.

The aqueous pesticide concentrates described herein show stability at low temperatures by remaining as homogeneous, flowable liquids. The concentrates that contain one or more water soluble salts of an auxinic herbicide as defined above, remain as homogeneous, flowable liquids at temperatures lower than 5°C, lower than 0°C, lower than -5°C, lower than -10°C, lower than -15°C, or lower than -20°C.

The concentrates can be added prior to use or at the time of use to form an emulsion. Such aqueous herbicidal concentrates may be diluted from 1 to 2000 fold in water at the point of use depending on the agricultural practices used in spray applications to control weeds in crops. The concentration of the concentrate in the final emulsion can be from 0.001% to 20% by weight, preferably 0.001% to 10% by weight, more preferably from 0.001% to 5% by weight. In some embodiments, the concentration is from 1 % to 5 % by volume, preferably from 1% to 3% by volume, more preferably from 1% to % by volume, most preferably from 1.5% to 2% by volume.

### A. Pesticides and Crop Protection Agents

The compositions described herein contain one or more pesticides and optionally crop protection agents. Examples of pesticides and crop protection agents include herbicides, herbicide safeners, fungicides and insecticides. The compositions contain a pesticide which is an auxinic herbicide selected from a water soluble salt of 2,4-D, a water soluble salt of triclopyr, a water soluble salt of dicamba, or a mixture thereof.

In some embodiments, the compositions are in the form of an aqueous pesticide concentrate. The concentrate may include one or more pesticides that are present in the aqueous concentrates as dissolved solids or emulsified liquids.

The aqueous concentrate compositions described herein include from 5 to 90 weight percent of one or more pesticides. Additional examples of concentrations for the pesticide incorporated into the aqueous pesticide concentrate mixture described herein include, from 5 to 85 weight percent of the concentrate mixture, from 5 to 80 weight percent of the concentrate mixture, from 5 to 75 weight percent of the concentrate mixture, from 5 to 70 weight percent of the concentrate mixture, from 5 to 65 weight percent of the concentrate mixture, from 5 to weight percent of the concentrate mixture, from 5 to 5 weight percent of the concentrate mixture, from 5 to 50 weight percent of the concentrate mixture, from 5 to 45 weight percent of the concentrate mixture, from 5 to 40 weight percent of the concentrate mixture, from 5 to 35 weight percent of the concentrate mixture, from 5 to 30 weight percent of the concentrate mixture, from 5 to 25 weight percent of the concentrate mixture, and from 5 to 20 weight percent of the concentrate mixture.

Further examples of concentrations for the pesticide incorporated into the aqueous pesticide concentrate mixture described herein include, from 10 to 90 weight percent of the concentrate mixture, from 15 to 90 weight percent of the concentrate mixture, from 20 to 90 weight percent of the concentrate mixture, from 25 to 90 weight percent of the concentrate mixture, from 30 to 90 weight percent of the concentrate mixture, from 5 to 90 weight percent of the concentrate mixture, from 40 to 90 weight percent of the concentrate mixture, from 45 to 90 weight percent of the concentrate mixture, from 50 to 90 weight percent of the concentrate mixture, from 5 to 90 weight percent of the concentrate mixture, from 60 to 90 weight percent of the concentrate mixture, from 65 to 90 weight percent of the concentrate mixture, from 70 to 90 weight percent of the concentrate mixture, from 75 to 90 weight percent of the concentrate mixture, from 80 to 90 weight percent of the concentrate mixture, and from 85 to 90 weight percent of the concentrate mixture.

More examples of concentrations for the pesticide incorporated into the aqueous pesticide concentrate mixture described herein include, from 10 to 85 weight percent of the concentrate mixture, from 15 to 80 weight percent of the concentrate mixture, from 20 to 75 weight percent of the concentrate mixture, from 25 to 5 weight percent of the concentrate mixture, from 30 to 70 weight percent of the concentrate mixture, from 35 to 65 weight percent of the concentrate mixture, from 40 to 60 weight percent of the concentrate mixture, from 45 to 60 weight percent of the concentrate mixture, from 40 to 55 weight percent of the concentrate mixture, and from 45 to 55 weight percent of the concentrate mixture.

### 1. Herbicides

Suitable further herbicides include acetochlor, aminopyralid, atrazine, benfluralin, clopyralid, cloransulam-methyl, cyhalofop-butyl, diclosulam, dithiopyr, ethalfluralin, florasulam, flumetsulam, fluroxypyr, glufosinate, glyphosate, halauxifen, haloxyfop, isoxaben, MCPA, MCPB, MSMA, oryzalin, oxyfluorfen, pendimethalin, penoxsulam, picloram, propanil, pyroxsulam, quizalofop, tebuthiuron, trifluralin or mixtures thereof. Herbicides especially useful with the methods and compositions described herein include auxinic herbicides, for example 2,4-DB, MCPA, MCPB, aminocyclopyrachlor, aminopyralid, clopyralid, fluroxypyr, halauxifen, picloram, or mixtures thereof. The methods and compositions described herein are useful for the application of herbicides that are subject to restricted applications around sensitive crops such as spray mixtures containing 2,4-D, triclopyr, dicamba, or mixtures thereof.

The aqueous pesticide spray mixtures described herein contain water soluble salts of auxinic herbicides selected from a water soluble salt of 2,4-D, a water soluble salt of triclopyr, a water soluble salt of dicamba, or a mixture thereof and optionally the water soluble salt of glyphosate. Suitable cations contained in these salts may include isopropyl ammonium, dimethyl ammonium, triethyl ammonium, monoethanol ammonium, diethanol ammonium, triethanol ammonium, dimethylethanol ammonium, diethyleneglycol ammonium, triisopropanol ammonium, tetramethyl ammonium, tetraethyl ammonium, choline, N,N-bis-(3-aminopropyl)methyl ammonium, and potassium. For example, in some embodiments, 2,4-D salts include the 2,4-D choline salt and the 2,4-D dimethyl ammonium salt, and glyphosate salts include the glyphosate dimethyl ammonium salt, the glyphosate isopropyl ammonium salt, and the glyphosate potassium salt.

Examples of an aqueous pesticide spray mixture containing water soluble salts of auxinic herbicides and optionally water soluble salts of glyphosate include 2,4-D choline salt or 2,4-D dimethyl ammonium salt and glyphosate dimethyl ammonium salt, glyphosate isopropyl ammonium salt, or glyphosate potassium salt; 2,4-D choline salt or 2,4-D dimethyl ammonium salt, glyphosate dimethyl ammonium salt, glyphosate isopropyl ammonium salt, or glyphosate potassium salt, and a normal paraffin, an isoparaffin, a cycloparaffin, a highly refined paraffinic mineral oil, a solvent dewaxed light or heavy paraffinic distillate, or mixtures thereof; 2,4-D choline salt, glyphosate dimethyl ammonium salt, and a normal paraffin, an isoparaffin, a cycloparaffin, a highly refined paraffinic mineral oil, a solvent dewaxed light or heavy paraffinic distillate, or mixtures thereof; 2,4-D choline salt, glyphosate dimethyl ammonium salt, and a normal paraffin, an isoparaffin, a cycloparaffin, a highly refined paraffinic mineral oil, a solvent dewaxed light or heavy paraffinic distillate, or mixtures thereof.

### 2. Herbicide safeners

Suitable safeners include cloquintocet, flurazole, mefenpyr, and TI-35.

### 3. Insecticides

Suitable insecticides include organophosphates such as chlorpyrifos, chlorpyrifos-methyl; MAC insecticides such as halofenozide, methoxyfenozide and tebufenozide; pyrethroids such as cypermethrin, gamma-cyhalothrin and deltamethrin; sulfoximines such as sulfoxaflor; and biologically derived pesticides such as spinosad and spinetoram.

### 4. Fungicides

Suitable fungicides include mancozeb, myclobutanil, fenbuconazole, zoxamide, propiconazole, quinoxyfen and thifluzamide.

### 5. Other active agents

The aqueous pesticide spray mixtures may be applied in conjunction with one or more other active ingredients to control a wider variety of unwanted plants, fungi, or insects. When used in conjunction with the other active ingredients, the compositions can be formulated with the other active ingredient or active ingredients as premix concentrates, tank mixed with the other active ingredient or active ingredients for spray application, or applied sequentially with the other active ingredient or active ingredients in separate spray applications.

In some embodiments, the aqueous pesticide spray mixtures may contain one or more biocides. Biocides may be present in the composition from 0.001 wt% to 0.1 wt%. In embodiments, the one or more biocides may be present in the composition at 0.001 wt%, 0.005 wt%, 0.01 wt%, 0.02 wt%,0.03 wt%, 0.04 wt%, 0.05 wt%, 0.06 wt%, 0.07 wt%, 0.08 wt%, 0.09 wt%, or 0.1 wt%. Examples of biocides include bactericides, viricides, fungicides, parasiticides. Examples of biocide active ingredients include phenol compounds (for example phenol, thymol, pentachlorophenol, cresol, and p-chloro-m-xylenol), aldehydic compounds (for example formaldehyde, glutaraldehyde, and paraformaldehyde), acid compounds (for example benzoic acid, sorbic acid, mucochloric acid, and mucobromic acid), esters of p-hydroxybenzoic acid (for example methyl-p-hydroxybenzoate and butyl-p-hydroxybenzoate), rare earth salts, amines, disulfides, heterocyclic compounds (for example thiazinium salts, thiazolinones, and benzimidazoles), quaternary ammonium salts, organic mercury compounds, hexamethylenebiguanide hydrochlorides, benzalkonium chlorides, polyamino propylbiguanides, and 1-2-benzisothiazoline-3-ones. For a specific example, an aqueous herbicide spray mixture may comprise Proxel® GXL (Arch Chemicals Inc., Atlanta, GA) as a biocide.

An example of a composition described herein that may be used in conjunction with another active ingredient contains an aqueous pre-mix concentrate containing a mixture of an auxinic herbicide which is a water soluble salt of 2,4-D, a water soluble salt of triclopyr, a water soluble salt of dicamba, or mixtures thereof, and a petroleum derived paraffinic oil. Such aqueous pre-mix herbicidal concentrates may be diluted from 1 to 2000 fold in water at the point of use depending on the agricultural practices and used in spray applications to control weeds in crops.

### B. Petroleum-derived paraffinic oils

The composition contains one or more petroleum-derived paraffinic oils. In some embodiments, the oil is a saturated hydrocarbon or hydrocarbons. The saturated hydrocarbon or hydrocarbons may contain small amounts of aromatic hydrocarbons, for example less than 8%, particularly less than 4%. Suitable petroleum derived paraffinic oils include one or more of petroleum fractions or hydrocarbons such as mineral oil (e.g., open-chain (straight-chain or branched) C₁₄-C₃₀ hydrocarbons, cyclic hydrocarbons (naphthenes), and aromatic hydrocarbons), kerosene, paraffinic oils including normal paraffins (e.g., straight chain and branched C₁₄-C₃₀ hydrocarbons known as base oil or white oil and commercially available, for example, as BAYOL® 85 (Exxon Mobil), MARCOL® 82 (Exxon Mobil), BAR 0020 (RA.M.oil S.p.A.), Pionier 0032-20 (Hansen &Rosenthal KG), and Kristol M14), isoparaffins, cycloparaffins, highly refined paraffinic mineral oils, solvent dewaxed light and heavy paraffinic distillates and mixtures thereof. Examples of commercially available petroleum derived paraffinic oils useful in the methods and compositions described herein include: Sunspray® 6N and 11N which are available from HollyFrontier (Tulsa, OK). The composition does not contain seed or vegetable oils.

The aqueous concentrate compositions described herein include from 0.1 to 20 weight percent of a petroleum derived paraffinic oil. Additional examples of concentrations for the petroleum derived paraffinic oil incorporated into the aqueous pesticide concentrate mixture described herein include, from 0.1 to 19 weight percent of the concentrate mixture, from 0.1 to 18 weight percent of the concentrate mixture, from 0.1 to 17 weight percent of the concentrate mixture, from 0.1 to 16 weight percent of the concentrate mixture, from 0.1 to 15 weight percent of the concentrate mixture, from 0.1 to 14 weight percent of the concentrate mixture, from 0.1 to 13 weight percent of the concentrate mixture, from 0.1 to 12 weight percent of the concentrate mixture, from 0.1 to 11 weight percent of the concentrate mixture, from 0.1 to 10 weight percent of the concentrate mixture, from 0.1 to 9 weight percent of the concentrate mixture, from 0.1 to 8 weight percent of the concentrate mixture, from 0.1 to 7 weight percent of the concentrate mixture, from 0.1 to 6 weight percent of the concentrate mixture, from 0.1 to 5 weight percent of the concentrate mixture, from 0.1 to 4.5 weight percent of the concentrate mixture, from 0.1 to 4 weight percent of the concentrate mixture, from 0.1 to 3.5 weight percent of the concentrate mixture, from 0.1 to 3 weight percent of the concentrate mixture, from 0.1 to 2.5 weight percent of the concentrate mixture, from 0.1 to 2 weight percent of the concentrate mixture, from 0.1 to 1.5 weight percent of the concentrate mixture, and from 0.1 to 1 weight percent of the concentrate mixture. Further examples of concentrations for the petroleum derived paraffinic oil incorporated into the aqueous pesticide concentrate mixture described herein include, from 0.2 to 20 weight percent of the concentrate mixture, from 0.3 to 20 weight percent of the concentrate mixture, from 0.4 to 20 weight percent of the concentrate mixture, from 0.5 to 20 weight percent of the concentrate mixture, from 0.6 to 20 weight percent of the concentrate mixture, from 0.7 to 20 weight percent of the concentrate mixture, from 0.8 to 20 weight percent of the concentrate mixture, from 0.9 to 20 weight percent of the concentrate mixture, from 1 to 20 weight percent of the concentrate mixture, from 1.5 to 20 weight percent of the concentrate mixture, from 2 to 20 weight percent of the concentrate mixture, from 3 to 20 weight percent of the concentrate mixture, from 4 to 20 weight percent of the concentrate mixture, from 5 to 20 weight percent of the concentrate mixture, from 6 to 20 weight percent of the concentrate mixture, from 7 to 20 weight percent of the concentrate mixture, from 8 to 20 weight percent of the concentrate mixture, from 9 to 20 weight percent of the concentrate mixture, from 10 to 20 weight percent of the concentrate mixture, from 11 to 20 weight percent of the concentrate mixture, from 12 to 20 weight percent of the concentrate mixture, from 13 to 20 weight percent of the concentrate mixture, from 14 to 20 weight percent of the concentrate mixture, from 15 to 20 weight percent of the concentrate mixture, from 16 to 20 weight percent of the concentrate mixture, from 17 to 20 weight percent of the concentrate mixture, from 18 to 20 weight percent of the concentrate mixture, and from 19 to 20 weight percent of the concentrate mixture. More examples of concentrations for the petroleum derived paraffinic oil incorporated into the aqueous pesticide concentrate mixture described herein include, from 0.2 to 19 weight percent of the concentrate mixture, from 0.3 to 18 weight percent of the concentrate mixture, from 0.4 to 17 weight percent of the concentrate mixture, from 0.5 to 16 weight percent of the concentrate mixture, from 0.6 to 15 weight percent of the concentrate mixture, from 0.7 to 14 weight percent of the concentrate mixture, from 0.8 to 13 weight percent of the concentrate mixture, from 0.9 to 12 weight percent of the concentrate mixture, from 1 to 11 weight percent of the concentrate mixture, from 2 to 10 weight percent of the concentrate mixture, from 2 to 9 weight percent of the concentrate mixture, from 2 to 8 weight percent of the concentrate mixture, from 2 to 7 weight percent of the concentrate mixture, from 2 to 6 weight percent of the concentrate mixture, from 2 to 5 weight percent of the concentrate mixture, from 2 to 4 weight percent of the concentrate mixture, and from 2 to 3 weight percent of the concentrate mixture.

### C. Surfactants

The compositions described herein additionally contain surfactants. For example, compositions as described herein that include glyphosate can optionally include an efficacy enhancing surfactant.

The surfactant or mixtures of surfactants used in the described compositions are present at a concentration of from 0.1 to 20 weight percent of the formulation. Suitable surfactants include phosphate ester surfactants, polymeric surfactants, or mixtures thereof and may be anionic or nonionic in character. Examples of suitable surfactants include ABA block copolymers; polyvinyl alcohol resins; block or graft acrylate or methacrylate copolymers; alkyd polyethylene oxide resins; AB block copolymers containing EO and PO blocks such as ethylene oxide-propylene oxide (EO-PO) block copolymers; acids or salts of mono and dialkyl phosphate esters; acids or salts of ethoxylated mono and dialkyl phosphate esters; acids or salts of mono and dialkyl phosphate esters of ethoxylated tristyrylphenol; acids or salts of mono and dialkyl phosphate esters of ethoxylated phenol and ethoxylated alkylphenols; and mixtures thereof.

Examples of suitable phosphate ester surfactants include Atlox™ DP13/6, Cresplus™ 1209, Crodafos™ 810A, Crodafos™ 810D, Crodafos™ CO5A, Crodafos™ CS2A, Crodafos™ D4A, Crodafos™ G26A, Crodafos™ O10A, Crodafos™ 03A, Multitrope 1214, Crodafos™ T5A, and Crodafos™ T6A (all from Croda; Edison, NJ), Cedephos FA-600, Petrostep® PE-70T, Polystep® P-12A, Polystep® P-33, Polystep® TSP-16PE, Stepan® MWA-311, Stepfac 8170, Stepfac 8171, Stepfac 8173, Stepfac 8175, Stepfac 8180, Stepfac 8181, Stepfac TSP-PE, Stepfac TSP-PE-K, Stepfac TSP-PE-N, Zelec® AN and Zelec® LA-2 (all from Stepan; Northfield, IL), Klearfac® AA 270, Maphos® 58, Maphos® 60 A, Maphos® 66 H, Maphos® M 60, Agnique® PE 2EH-2k, Agnique® PE NP-4, Agnique® PE NP-6, Agnique® PE NP-9, Agnique® PE DNP-8, Agnique® PE IDA-6, Agnique® PE TDA-6, Agnique® PE 25, Agnique® PE 28, Agnique® PE 28-9N and Agnique® PE 68-5 (all from BASF; Florham Park, NJ), Duraphos 100, Duraphos 178, Lubrhophos LB 400, Lubrhophos LB/400-E, Lubrhophos LP/700 E, Lubrhophos RD/510-E, Rhodafac® AAP, Rhodafac® BN-936/S, Rhodafac® HA70, Rhodafac® LO-11/ALA, Rhodafac® LO/529-E, Rhodafac® PA 15, Rhodafac® PA 23, Rhodafac® PA 35, Rhodafac® PA/32, Rhodafac® PE 510, Rhodafac® RM 710, Rhodafac® RM/510-E, Rhodafac® RS 410, Rhodafac® RS 610-E, Rhodafac® RS 710, Rhodafac® RS-610/A25, Rhodafac® RS/710-E, Soprophor® 3 D 33, Trimethyl Phosphite HP and Trimethyl Phosphite (all from Rhodia; Cranberry, NJ), and the SURFONIC® PE series and the EMPIPHOS® series (both from Huntsman International LLC; The Woodlands, TX).

Examples of suitable polymeric surfactants include (1) ABA block copolymers having a hydrophilic portion of polyethylene oxide and a hydrophobic portion of poly(12-hydroxystearate), for example, Atlox™ 4912 (Croda; Edison, NJ), having a molecular weight of ca. 5,000 and Termul™ 2510 (Huntsman International LLC; The Woodlands, TX); (2) polyvinyl alcohol resins with a degree of hydrolysis of 86-89%, for example, Gohsenol GL03 and Gohsenol GL05 (The Nippon Synthetic Chemical Industry Co., Ltd.; Osaka, Japan); (3) methyl methacrylate graft copolymers, for example, Atlox™ 4913 (Croda; Edison, NJ); (4) alkyd polyethylene oxide resins, for example, Atlox™ 4914 (Croda; Edison, NJ) ; (5) EO-PO block copolymers, for example, Atlas™ G-5000 (Croda; Edison, NJ), and the Pluronic® block copolymers (BASF; Florham Park, NJ). In some embodiments, the polymeric surfactants include the ABA block copolymers and EO-PO block copolymers.

The aqueous concentrate compositions described herein include from 0.1 to 20 weight percent of a surfactant. Additional examples of concentrations for the surfactant incorporated into the aqueous pesticide concentrate mixture described herein include, from 0.1 to 19 weight percent of the concentrate mixture, from 0.1 to 18 weight percent of the concentrate mixture, from 0.1 to 17 weight percent of the concentrate mixture, from 0.1 to 16 weight percent of the concentrate mixture, from 0.1 to 15 weight percent of the concentrate mixture, from 0.1 to 14 weight percent of the concentrate mixture, from 0.1 to 13 weight percent of the concentrate mixture, from 0.1 to 12 weight percent of the concentrate mixture, from 0.1 to 11 weight percent of the concentrate mixture, from 0.1 to 10 weight percent of the concentrate mixture, from 0.1 to 9 weight percent of the concentrate mixture, from 0.1 to 8 weight percent of the concentrate mixture, from 0.1 to 7 weight percent of the concentrate mixture, from 0.1 to 6 weight percent of the concentrate mixture, from 0.1 to 5 weight percent of the concentrate mixture, from 0.1 to 4.5 weight percent of the concentrate mixture, from 0.1 to 4 weight percent of the concentrate mixture, from 0.1 to 3.5 weight percent of the concentrate mixture, from 0.1 to 3 weight percent of the concentrate mixture, from 0.1 to 2.5 weight percent of the concentrate mixture, from 0.1 to 2 weight percent of the concentrate mixture, from 0.1 to 1.5 weight percent of the concentrate mixture, and from 0.1 to 1 weight percent of the concentrate mixture. Further examples of concentrations for the surfactant incorporated into the aqueous pesticide concentrate mixture described herein include, from 0.2 to 20 weight percent of the concentrate mixture, from 0.3 to 20 weight percent of the concentrate mixture, from 0.4 to 20 weight percent of the concentrate mixture, from 0.5 to 20 weight percent of the concentrate mixture, from 0.6 to 20 weight percent of the concentrate mixture, from 0.7 to 20 weight percent of the concentrate mixture, from 0.8 to 20 weight percent of the concentrate mixture, from 0.9 to 20 weight percent of the concentrate mixture, from 1 to 20 weight percent of the concentrate mixture, from 1.5 to 20 weight percent of the concentrate mixture, from 2 to 20 weight percent of the concentrate mixture, from 3 to 20 weight percent of the concentrate mixture, from 4 to 20 weight percent of the concentrate mixture, from 5 to 20 weight percent of the concentrate mixture, from 6 to 20 weight percent of the concentrate mixture, from 7 to 20 weight percent of the concentrate mixture, from 8 to 20 weight percent of the concentrate mixture, from 9 to 20 weight percent of the concentrate mixture, from 10 to 20 weight percent of the concentrate mixture, from 11 to 20 weight percent of the concentrate mixture, from 12 to 20 weight percent of the concentrate mixture, from 13 to 20 weight percent of the concentrate mixture, from 14 to 20 weight percent of the concentrate mixture, from 15 to 20 weight percent of the concentrate mixture, from 16 to 20 weight percent of the concentrate mixture, from 17 to 20 weight percent of the concentrate mixture, from 18 to 20 weight percent of the concentrate mixture, and from 19 to 20 weight percent of the concentrate mixture. More examples of concentrations for the surfactant incorporated into the aqueous pesticide concentrate mixture described herein include, from 0.2 to 19 weight percent of the concentrate mixture, from 0.3 to 18 weight percent of the concentrate mixture, from 0.4 to 17 weight percent of the concentrate mixture, from 0.5 to 16 weight percent of the concentrate mixture, from 0.6 to 15 weight percent of the concentrate mixture, from 0.7 to 14 weight percent of the concentrate mixture, from 0.8 to 13 weight percent of the concentrate mixture, from 0.9 to 12 weight percent of the concentrate mixture, from 1 to 11 weight percent of the concentrate mixture, from 2 to 10 weight percent of the concentrate mixture, from 2 to 9 weight percent of the concentrate mixture, from 2 to 8 weight percent of the concentrate mixture, from 2 to 7 weight percent of the concentrate mixture, from 2 to 6 weight percent of the concentrate mixture, from 2 to 5 weight percent of the concentrate mixture, from 2 to 4 weight percent of the concentrate mixture, and from 2 to 3 weight percent of the concentrate mixture.

### D. Penetrations Enhancers

The concentrates or herbicidal compositions may contain one or more penetration enhancers that improve transmission of the pesticide into the leaf of the plant or plants to be controlled. Exemplary penetration enhancers include alkanol alkoxylates, such as those described in WO 2011/147766.

### E. Additional Additives

The concentrate may further contain one or more additional additives including emulsifiers, antifoam agents, preservatives, and antioxidants.

Suitable emulsifiers include ethoxylated nonylphenols, reaction products of alkylphenols with ethylene oxide and/or propylene oxide, ethoxylated arylalkylphenols, furthermore ethoxylated and propoxylated arylalkylphenols, and sulphated or phosphated arylalkyl ethoxylates or -ethoxy-propoxylates, and sorbitan derivatives, such as polyethylene oxide-sorbitan fatty acid esters and sorbitan fatty acid esters.

Suitable antifoam substances are all substances which can customarily be employed in agrochemical agents for this purpose. Silicone oils and magnesium stearate are examples.

Suitable preservatives are all substances which can customarily be employed in agrochemical agents for this purpose. Examples which may be mentioned are Preventol® (Lanxess®) and Proxel®.

Suitable antioxidants are all substances which can customarily be employed in agrochemical agents for this purpose. Butylhydroxytoluene is an example.

### F. Spray Droplet Size

The optimum spray droplet size depends on the application for which the herbicide composition is used. If droplets are too large, there will be less coverage by the spray; i.e, large droplets will land in certain areas while areas in between will receive little or no spray coverage. The maximum acceptable droplet size may depend on the amount of composition being applied per unit area and the need for uniformity in spray coverage. Smaller droplets provide more even coverage, but are more prone to drift during spraying. Thus, application parameters such as uniformity in spray coverage must be balanced against the tendency for smaller droplets to drift. For example, if it is particularly windy during spraying, larger droplets may be needed to reduce drift, whereas on a calmer day smaller droplets may be acceptable.

In addition to the physical properties of a particular aqueous pesticide composition, spray droplet size may also depend on the spray apparatus, e.g., nozzle size and configuration. The reduction in spray drift may result from a variety of factors including a reduction in the production of fine spray droplets (<150 µm minimum diameter) and an increase in the volume median diameter (VMD) of the spray droplets. In any event, for a given spray apparatus, application, and conditions, and based on the petroleum derived paraffinic oil, the median diameter of the plurality of spray droplets created using the compositions and methods described herein is increased above that of a spray composition that does not include the petroleum derived paraffinic oil as described herein. In some embodiments the volume percentage of driftable fines having a diameter less than 150 microns after storage at room temperature (∼25°C) for 7 days is less than 35, 30, 29, 28, 27, 26, 25, 24, 23, 22, 21, or 20%. In other embodiments, the volume percentage of driftable fines having a diameter less than 150 microns after storage at -20°C for 7 days is less than 35, 30, 29, 28, 27, 26, 25, 24, 23, 22, 21, or 20%.

In some embodiments, the pesticide is 2,4-D choline and the volume percentage of driftable fines having a diameter less than 150 microns after storage at room temperature (∼25 °C) for 7 days is less than 21%, for example, from 17% to 20%. In other embodiments, the pesticide is 2,4-D choline and the volume percentage of driftable fines having a diameter less than 150 microns after storage at -20°C for 7 days is less than 21%, for example, from 17% to 20%.

In other embodiments, the pesticide is a mixture of 2,4-D choline and the potassium salt of glyphosate (Roundup PowerMax®) and the volume percentage of driftable fines having a diameter less than 150 microns after storage at room temperature (∼25°C) for 7 days is less than 31 %, for example, from 20% to 30%, preferably from 23% to 30%, most preferably from 24% to 29%. In other embodiments, the pesticide is a mixture of 2,4-D choline and the potassium salt of glyphosate (Roundup PowerMax®) and the volume percentage of driftable fines having a diameter less than 150 microns after storage at -20°C for 7 days is less than 31%, for example, from 20% to 30%, preferably from 23% to 30%, most preferably from 24% to 29%.

In some embodiments, the pesticide is a mixture of 2,4-D choline and the dimethyl amine (DMA) salt of glyphosate (Durango® DMA®) and the volume percentage of driftable fines having a diameter less than 150 microns after storage at room temperature (∼25°C) for 7 days is less than 30%, for example, from 20% to 29%, preferably from 23% to 28%. In other embodiments, the pesticide is a mixture of 2,4-D choline and the dimethyl amine (DMA) salt of glyphosate (Durango® DMA®) and the volume percentage of driftable fines having a diameter less than 150 microns after storage at -20°C for 7 days is less than 28%, for example, from 19% to 27%, preferably from 19% to 26%.

The following Examples are presented to illustrate various aspects of the compositions and methods described herein.

### Example 1

### 2,4-D choline aqueous concentrates with built-in petroleum derived paraffinic oils:

Aqueous herbicide concentrates containing 383 grams acid equivalent per kilogram (gae/kg) of 2,4-D choline, 20 g/kg of Atlox DP 13/6 surfactant (Croda; Edison, NJ), 20 g/kg of glycerin, 5.0 g/kg of ethylenediaminetetraacetic acid choline salt (EDTA-choline; prepared by adding 1028.25 g of EDTA acid and 689.7 g of DI water into 2310.0 g of choline hydroxide solution (45 wt% in water) and stirring until all solids are dissolved), 2.5 g/kg of polymeric surfactant Atlox™ 4912 (Croda; Edison, NJ), 5.5 g/kg of choline hydroxide (Aldrich), 20 g/kg of a paraffinic oil (Sunspray® 6N or 11N; HollyFrontier, Tulsa, OK), and 52 g/kg of a co-solvent selected from Dowanol™ DPM, Dowanol™ PM, or Proglyde™ DMM (The Dow Chemical Co., Midland, MI) were prepared as described using the ingredients shown in Table 1. A 4-oz vial (Vial A) was first charged with 2.00 g of a paraffinic oil shown in Table 2. To the vial were added, 2.00 g of Atlox DP 13/6, 0.25 g of Atlox™ 4912, 2.00 g of glycerin, 5.20 g of co-solvent (Dowanol™ DPM, Dowanol™ PM, or Proglyde™ DMM), and the mixture was stirred with a magnetic stirrer until a homogenous solution formed. To a second 4-oz vial (Vial B) were added 86.00 g of a 44.5 wt% ae basis 2,4-D choline salt solution in water, 2.00 g of an EDTA-choline aqueous solution (25 wt%), 0.55 g of choline hydroxide (45 wt%), and all of the ingredients in vial A to provide a total sample weight of 100 g. The mixture was then mixed with a magnetic stirrer to provide a homogenous herbicide concentrate with built-in paraffinic oil. Samples 27 through 32 and sample 39 (Table 2), containing no paraffinic oil (control), were prepared in this manner.

**Table 1. Composition of 2,4-D Aqueous Concentrates**

| **Component** | **Wt%** |
|---|---|
| 2,4-D choline (44.5 wt% AE 2,4-D in water) | 86.00% |
| EDTA-choline (25 wt% in water) | 2.00% |
| choline hydroxide (45 wt% in water) | 0.55% |
| glycerin | 2.00% |
| co-solvent | 5.20% |
| paraffinic oil | 2.00% |
| Atlox DP13/6 | 2.00% |
| Atlox 4912 | 0.25% |
| Total | 100.00% |

**Table 2. Co-solvent and Paraffinic Oil Combinations Used to Prepare the 2,4-D Aqueous Concentrates**

| **Sample** # | **Co-Solvent¹** | **Paraffinic Oil** |
|---|---|---|
| 27 | Dowanol™ DPM | Sunspray 6N |
| 28 | Proglyde™ DMM | Sunspray 6N |
| 29 | Dowanol™ PM | Sunspray 6N |
| 30 | Dowanol™ DPM | Sunspray 11N |
| 31 | Proglyde™ DMM | Sunspray 11N |
| 32 | Dowanol™ PM | Sunspray 11N |
| 39 (control) | Proglyde™ DMM | none |

Samples of the concentrates were then stored at -20°C or RT for 7 days. After 7 days, all samples were observed to be fluid and homogenous. All samples were evaluated for their spray drift reduction potential. The concentrates was diluted in 342 ppm hardness water for all spray evaluations. The diluted 2,4-D choline concentrates were sprayed (800 gae/ha application rate) at a spray volume of 10 gallons per acre (93.5 liters per hectare) alone and together with either glyphosate potassium salt (Roundup PowerMax®; 840 gae/ha application rate) or glyphosate dimethylamine salt (Durango® DMA®; 840 gae/ha application rate).

### 2,4-D Choline herbicide spray solutions and spray droplet analysis:

The aqueous 2,4-D choline concentrates containing the paraffinic oils and co-solvents shown in Table 2 and the aqueous concentrate containing 2,4-D choline and EDTA-choline and no paraffinic oil (control sample) were each tank-mixed with 342 ppm hardness water alone (Spray solutions A in Table 3), with an aqueous solution of glyphosate potassium salt (Spray solutions B in Table 3) and with an aqueous solution of glyphosate dimethylamine salt (Spray solutions C in Table 3). Spray solutions A containing 1.87 % v/v 2,4-D choline were prepared by diluting 5.61 mL of each 2,4-D choline concentrate with 294.39 mL of water. Spray solutions B containing 1.87 % v/v 2,4-D choline and 1.66 % v/v glyphosate potassium were prepared by diluting 5.61 mL of each 2,4-D choline concentrate with 4.99 mL of RoundUp PowerMax® (containing 540 gae/L of glyphosate potassium; Monsanto; St. Louis, MO) and 289.40 mL of water. Spray solutions C containing 1.87 % v/v 2,4-D choline and 1.87 % v/v glyphosate dimethylamine salt were prepared by diluting 5.61 mL of each of each 2,4-D choline concentrates with 5.61 mL of Durango® DMA® herbicide (containing 480 gae/L of glyphosate dimethylamine salt; Dow AgroSciences; Indianapolis, IN) and 288.78 mL of water. All tank mixed herbicide spray solutions were lightly shaken by hand until each sample was homogenous. The herbicide spray solutions containing paraffinic oils and the control samples without paraffinic oils were sprayed using a Teejet® 8002 flat fan nozzle (Teejet Technologies; Wheaton, IL) at 40 psi (276 kiloPascal) and the spray droplet size distribution measurement was made with a Sympatec Helos/KF high resolution laser diffraction particle sizer with an R7 lens (Sympatec GmbH; Clausthal-Zellerfeld, Germany). The tip of the nozzle was situated 12 inches (30.5 centimeters) above the path of the laser beam of the Sympatec particle sizer. The percentage of driftable fines was expressed as the volume percentage of spray droplets below 150 µm volume mean diameter (VMD) as shown in Table 3.

**Table 3: Spray Droplet Analysis of 2,4-D Herbicide**

| | **Sprays Containing Paraffinic Oils After Storage of Aqueous Concentrates or -20 °C for 7 Days** | |
|---|---|---|
| **Paraffinic Oil and Co-solvent Samples Used (Table 2)** | **Herbicide Spray Droplet Analysis** | |
| | Volume Percentage of Driftable Fines <150 µm VMD after Storage for 7 days @ RT | Volume Percentage of Driftable Fines <150 µm VMD after Storage for 7 days @ -20 °C |
| | **Spray Solutions A: 2,4-D choline** | |
| 39 (control)¹ | 49.7% | - |
| 27 | 19.8% | 19.3% |
| 28 | 18.7% | 18.9% |
| 29 | 17.2% | 17.4% |
| 30 | 19.6% | 18.9% |
| 31 | 18.8% | 19.5% |
| 32 | 17.2% | 18.9% |

| | **Spray Solutions B**: **2,4-D choline + Roundup PowerMax®** | |
|---|---|---|
| 39 (control)¹ | 52.5% | - |
| 27 | 28.9% | 29.3% |
| 28 | 23.9% | 25.9% |
| 29 | 24.8% | 24.6% |
| 30 | 29.1% | 28.3% |
| 31 | 24.6% | 25.1% |
| 32 | 24.7% | 28.5% |

| | **Spray Solutions C**: **2,4-D choline + Durango® DMA®** | |
|---|---|---|
| 39 (control)¹ | 52.5% | - |
| 27 | 23.8% | 23.6% |
| 28 | 25.9% | 19.9% |
| 29 | 24.6% | 21.8% |
| 30 | 28.3% | 20.7% |
| 31 | 25.1% | 21% |
| 32 | 28.5% | 25% |

| | | |
|---|---|---|
| ¹The control spray samples contain co-solvent Proglyde™ DMM and no paraffinic oil; the control sample concentrate was not subjected to low temperature storage conditions. | | |

## Claims

1. An aqueous pesticide concentrate, comprising:
(a) from 5 to 90 weight percent of a pesticide which is an auxinic herbicide selected from a water soluble salt of 2,4-D, a water soluble salt of triclopyr, a water soluble salt of dicamba, or a mixture thereof;
(b) from 0.1 to 20 weight percent of a surfactant wherein the surfactant is selected from phosphate ester surfactants, polymeric surfactants and mixtures thereof, said surfactants being an acid or salt of a mono or dialkyl phosphate ester, an acid or salt of an ethoxylated mono or dialkyl phosphate ester, an acid or salt of a mono or dialkyl phosphate ester of an ethoxylated tristyrylphenol, an acid or salt of a mono or dialkyl phosphate ester of an ethoxylated phenol or an ethoxylated alkylphenol, an ABA block copolymer having a hydrophilic portion of polyethylene oxide and a hydrophobic portion of poly(12-hydroxystearate), a polyvinyl alcohol resin wherein the degree of hydrolysis is 86-89%, a block or graft acrylate or methacrylate copolymer, an alkyd polyethylene oxide resin, or an AB block copolymer containing EO and PO blocks; and
(c) from 0.1 to 20 weight percent of a petroleum derived paraffinic oil;
wherein the aqueous pesticide concentrate is a homogeneous liquid that forms a stable emulsion upon dilution into a spray solution.

2. The aqueous pesticide concentrate of claim 1, wherein the petroleum derived paraffinic oil is a normal paraffin, an isoparaffin, a cycloparaffin, a highly refined paraffinic mineral oil, a solvent dewaxed light and/or heavy paraffinic distillate, or mixtures thereof.

3. The aqueous concentrate composition of claim 1, wherein the auxinic herbicide is a water soluble salt of 2,4-D.

4. The aqueous concentrate composition of claim 3, wherein the auxinic herbicide is 2,4-D choline salt, or 2,4-D dimethyl ammonium salt.

5. The aqueous concentrate composition of any of claims 1 - 4, further comprising an additional herbicide.

6. The aqueous concentrate composition of claim 5, wherein the additional herbicide is glyphosate or glufosinate.

7. The aqueous concentrate composition of claim 6 wherein the glyphosate is glyphosate dimethyl ammonium salt, glyphosate isopropyl ammonium salt, or glyphosate potassium salt.

8. The aqueous concentrate composition of any of claims 1 - 7, wherein the aqueous concentrate composition is a homogeneous, flowable liquid at temperatures lower than 5°C, preferably lower than 0°C, more preferably lower than -5°C, most preferably lower than -10°C.

9. A herbicidal composition comprising the aqueous concentrate of any one of claims 4 - 8, wherein the auxinic herbicide is 2,4-D choline salt.

10. The composition of claim 9, wherein the concentration of the aqueous concentrate in the composition is from 0.001 % to 20% by volume, preferably 0.001% to 10% by volume, more preferably from 0.001% to 5% by volume.

## Patentansprüche

1. Ein wässriges Pestizidkonzentrat umfassend:
(a) von 5 bis 90 Gew.-% eines Pestizids, wobei das Pestizid ein Herbizid vom Auxintyp ist, welches aus einem wasserlöslichen Salz von 2,4-D, einem wasserlöslichen Salz von Triclopyr, einem wasserlöslichen Salz von Dicamba oder Mischungen davon ausgewählt ist;
(b) von 0,1 bis 20 Gew.-% eines oberflächenaktiven Mittels, wobei das oberflächenaktive Mittel aus oberflächenaktiven Mitteln vom Phosphatestertyp, polymeren oberflächenaktiven Mitteln und Mischungen davon ausgewählt ist, wobei die oberflächenaktiven Mittel eine Säure oder ein Salz eines Mono- oder Dialkylphosphatesters, eine Säure oder ein Salz eines ethoxylierten Mono- oder Dialkylphosphatesters, eine Säure oder ein Salz eines Mono- oder Dialkylphosphatesters eines ethoxylierten Tristryrolphenols, eine Säure oder ein Salz eines Mono- oder Dialkylphosphatesters eines ethoxylierten Phenols oder eines ethoxylierten Alkylphenols, ein ABA-Block-Copolymer mit einem hydrophilen Teil von Polyethylenoxid und einem hydrophoben Teil von Poly(12-hydroxystearat), ein Polyvinylalkoholharz, wobei der Hydrolysegrad 86-89 % beträgt, ein Block- oder Pfropfacrylat- oder Methacrylat-Copolymer, ein Alkydpolyethylenoxidharz oder ein AB-Block-Copolymer enthaltend EO- und PO-Blöcke sind; und
(c) von 0,1 bis 20 Gew.-% eines aus Erdöl erhaltenen paraffinischen Öls;
wobei das wässrige Pestizid konzentrat eine homogene Flüssigkeit ist, die bei Verdünnung zu einer Sprühlösung eine stabile Emulsion bildet.

2. Die wässrige Konzentratzusammensetzung gemäß Anspruch 1, wobei das aus Erdöl erhaltene paraffinische Öl ein normales Paraffin, ein Isoparaffin, ein Cycloparaffin, ein hochraffiniertes paraffinisches Mineralöl, ein mit Lösungsmittel entwachstes leichtes und/oder schweres Paraffindestillat oder Mischungen davon ist.

3. Die wässrige Konzentratzusammensetzung gemäß Anspruch 1, wobei das Herbizid vom Auxintyp ein wasserlösliches Salz von 2,4-D ist.

4. Die wässrige Konzentratzusammensetzung gemäß Anspruch 3, wobei das Herbizid vom Auxintyp 2,4-D-Cholinsalz oder 2,4-Dimethylammoniumsalz ist.

5. Die wässrige Konzentratzusammensetzung gemäß einem der Ansprüche 1 bis 4, des Weiteren umfassend ein zusätzliches Herbizid.

6. Die wässrige Konzentratzusammensetzung gemäß Anspruch 5, wobei das zusätzliche Herbizid Glyphosat oder Glufosinat ist.

7. Die wässrige Konzentratzusammensetzung gemäß Anspruch 6, wobei das Glyphosat Glyphosatdimethylammoniumsalz oder Glyphosatisopropylammoniumsalz ist.

8. Die wässrige Konzentratzusammensetzung gemäß einem der Ansprüche 1 bis 7, wobei die wässrige Konzentratzusammensetzung bei Temperaturen von weniger als 5°C, vorzugsweise weniger als 0°C, weiterhin bevorzugt weniger als -5°C, besonders bevorzugt weniger als -10°C eine homogene, fließfähige Flüssigkeit ist.

9. Eine herbizide Zusammensetzung umfassend das wässrige Konzentrat gemäß einem der Ansprüche 4 bis 8, wobei das Herbizid vom Auxintyp 2,4-D-Cholinsalz ist.

10. Die Zusammensetzung gemäß Anspruch 9, wobei die Konzentration des wässrigen Konzentrats in der Zusammensetzung von 0,001 Vol.-% bis 20 Vol.-%, vorzugsweise von 0,001 Vol.-% bis 10 Vol.-%, weiterhin bevorzugt von 0,001 Vol.-% bis 5 Vol.-% beträgt.

## Revendications

1. Concentré aqueux de pesticide, comprenant :
(a) de 5 à 90 pour cent en poids d'un pesticide qui est un herbicide auxinique choisi parmi un sel hydrosoluble de 2,4-D, un sel hydrosoluble de triclopyr, un sel hydrosoluble de dicamba, ou un mélange de ceux-ci ;
(b) de 0,1 à 20 pour cent en poids d'un tensioactif, où le tensioactif est choisi parmi les tensioactifs de type ester phosphate, les tensioactifs polymères et des mélanges de ceux-ci, lesdits tensioactifs consistant en un acide ou sel d'un ester mono- ou dialkylphosphate, un acide ou sel d'un ester mono- ou dialkylphosphate éthoxylé, un acide ou sel d'un ester mono- ou dialkylphosphate d'un tristyrylphénol éthoxylé, un acide ou sel d'un ester mono- ou dialkylphosphate d'un phénol éthoxylé ou d'un alkylphénol éthoxylé, un copolymère séquencé ABA comportant une partie hydrophile de polyoxyéthylène et une partie hydrophobe de poly(12-hydroxystéarate), une résine de type poly(alcool vinylique) dans laquelle le degré d'hydrolyse est de 86-89 %, un copolymère d'acrylate ou de méthacrylate greffé ou séquencé, une résine de type alkyde polyoxyéthylénique, ou un copolymère séquencé AB contenant des séquences EO et PO ; et
(c) de 0,1 à 20 pour cent en poids d'une huile paraffinique dérivée du pétrole ;
où le concentré aqueux de pesticide est un liquide homogène qui forme une émulsion stable lors de la dilution en une solution pour pulvérisation.

2. Concentré aqueux de pesticide selon la revendication 1, dans laquelle l'huile paraffinique dérivée du pétrole est une paraffine normale, une isoparaffine, une cycloparaffine, une huile minérale paraffinique hautement ramifiée, un distillat paraffinique léger et/ou distillat paraffinique lourd, déparaffiné au solvant, ou des mélanges de telles huiles.

3. Composition de concentré aqueux selon la revendication 1, dans laquelle l'herbicide auxinique est un sel hydrosoluble de 2,4-D.

4. Composition de concentré aqueux selon la revendication 3, dans laquelle l'herbicide auxinique est le sel de choline de 2,4-D, ou le sel de diméthylammonium de 2,4-D.

5. Composition de concentré aqueux selon l'une quelconque des revendications 1 à 4, comprenant encore un herbicide supplémentaire.

6. Composition de concentré aqueux selon la revendication 5, dans laquelle l'herbicide supplémentaire est le glyphosate ou le glufosinate.

7. Composition de concentré aqueux selon la revendication 6, dans laquelle le glyphosate est le sel de diméthylammonium de glyphosate, le sel d'isopropylammonium de glyphosate ou le sel de potassium de glyphosate.

8. Composition de concentré aqueux selon l'une quelconque des revendications 1 à 7, où la composition de concentré aqueux est un liquide homogène fluide à des températures inférieures à 5 °C, de préférence inférieures à 0 °C, de façon plus particulièrement préférée inférieures à -5 °C, de façon tout particulièrement préférée inférieures à -10 °C.

9. Composition herbicide comprenant le concentré aqueux selon l'une quelconque des revendications 4 à 8, dans laquelle l'herbicide auxinique est le sel de choline de 2,4-D.

10. Composition selon la revendication 9, dans laquelle la concentration du concentré aqueux dans la composition vaut de 0,001 % à 20 % en volume, de préférence de 0,001 % en volume à 10 % en volume, de façon plus particulièrement préférée de 0,001 % à 5 % en volume.
